# EUROPÄISCHE PATENTSCHRIFT

(11) **EP 0 582 950 B1**
(45) Veröffentlichungstag und Bekanntmachung des Hinweises auf die Patenterteilung: **24.09.1997**
(21) Anmeldenummer: 93112460.6
(22) Anmeldetag: 04.08.1993
(51) Int. Cl.: B05D 5/02, D21F 3/08, F16C 13/00

(54) **Faserverstärkte Kunststoffwalze mit äusserer, verschleissfester, füllerhaltiger Kunststoffschicht**
Fibre reinforced plastic roll with a wear-resistant outer plastic layer containing filler agents
Rouleau en matière plastique renforcée par des fibres avec une couche extérieure résistant à l'usure contenant des agents de charge

(30) Priorität: 13.08.1992 DE 4226789
(43) Veröffentlichungstag der Anmeldung: 16.02.1994
(73) Patentinhaber: SGL TECHNIK GMBH, 86405 Meitingen (DE)
(72) Erfinder: Habenicht, Hinrich, Dipl.-Ing., D-86368 Gersthofen (DE); Wohletz, Bernd, D-86405 Meitingen (DE)

(56) Entgegenhaltungen:
- EP-A- 0 487 477
- DE-A- 3 715 894
- DE-A- 3 842 673
- DE-A- 4 014 623
- DE-C- 3 527 912
- DE-U- 8 406 019
- DE-U- 8 629 403
- FR-A- 2 178 644
- PATENT ABSTRACTS OF JAPAN vol. 14, no. 410 (M-1020)1990 & JP-A-2159409 (MITSUBISHI RAYON)
- PATENT ABSTRACTS OF JAPAN vol. 11, no. 105 (M-577)1987 & JP-A-61253141 (ASAHI MALLEABLE IRON)
- PATENT ABSTRACTS OF JAPAN vol. 11, no. 300 (C-449)1987 & JP-A-62091539 (NIPPON SHEET GLASS)

## Beschreibung

Die Erfindung betrifft eine Walze oder Rolle aus einem walzen- oder rollenförmigen Basiskörper aus faserverstärktem Kunststoff gemäß dem Oberbegriff des Anspruchs 1, wie aus der DE-U-83 22 639 bekannt sowie ein Verfahren zur Herstellung einer derartigen Walze oder Rolle. Insbesondere betrifft die Erfindung gattungsgemäße Rollen oder Walzen für Zwecke der Bahnführung, Umlenkung, zum Transport oder zum Auf- und Abwickeln von Papier-, Folien- oder Stoffbahnen.

Bei der Herstellung und Verarbeitung von Papier, von Kunststoffen oder sonstigen Stoffen in Form von Bahnen werden heute für den Transport, die Führung, das Umlenken und das Auf- bzw. das Abwickeln Walzen aus Metall oder aus mit Fasern verstärktem Kunststoff verwendet. Metallische Walzen lassen sich mit hoher Präzision zu vergleichsweise günstigen Kosten herstellen. Ihre Oberfläche kann den jeweiligen Anforderungen bezüglich Oberflächenrauhigkeit, -Härte, Abrasions- oder Korrosionsverhalten problemlos angepaßt werden. Der Nachteil dieses Walzentyps liegt in seiner hohen Masse und damit Trägheit. Metallische Walzen sind infolgedessen hohen Fliehkräften mit der Gefahr von Verformungen oder unruhigem Lauf ausgesetzt, die Antriebskräfte sind vergleichsweise hoch und an den Massenausgleich werden hohe Anforderungen gestellt. Die große Masse solcher Walzen muß zudem bei der konstruktiven Auslegung der Maschinen und Anlagen berücksichtigt werden und führt dort zu entsprechend schweren und damit aufwendigen Rahmen-, Lager- und Antriebsausführungen. Diese Nachteile weisen aus mit Fasern, speziell aus mit Kohlenstoffasern verstärkten Kunststoffen bestehende Walzen nicht auf. Derartige Walzen haben gegenüber Metallwalzen bei gleicher Biegesteifigkeit, verbesserter Formhaltigkeit und guter Korrosionsbeständigkeit eine wesentlich geringere Masse, was große Vorteile im dynamischen Verhalten und in der Anlagenauslegung mit sich bringt. Durch das deutsche Gebrauchsmuster Nr. 83 22 639 ist eine derartige, ausschließlich aus faserverstärktem Kunststoff bestehende Walze offenbart worden. Bei dieser Walze ist die äußere, naturgemäß aus faserverstärktem Kunststoff bestehende zylinderförmige Oberfläche gleichzeitig Arbeitsoberfläche. Eine andere, einen Kern aus faserverstärktem Kunststoff und zusätzliche Oberflächenschichten aufweisende Walze ist aus der JP-A- 21 59 409 bekannt. Bei dieser Walze befindet sich auf der inneren Basiswalze aus faserverstärktem Kunststoff eine Zwischenschicht aus einem einen anorganischen Füller enthaltenden Kunstharz. Diese Zwischenschicht trägt als äußere Arbeitsschicht einen Mantel aus einem Fluorpolymeren. Die Zwischenschicht ist mit dem Walzenkern und mit der äußeren Arbeitsschicht verbunden. Eine solche Walze oder Rolle weist bei hoher Steifigkeit ein geringes Gewicht auf, die Schichten haben eine gute Haftfestigkeit aneinander und sie sind gegen chemischen Angriff in weiten Grenzen beständig. Nachteilig ist jedoch das Vorhandensein mehrerer äußerer Schichten, die nach getrennten und unterschiedlichen Arbeitsverfahren aufgebracht werden müssen, was mit hohem Herstellungsaufwand verbunden ist. Ein weiterer Nachteil ist die geringe Beständigkeit der äußeren Arbeitsschicht gegen Abrasion. Eine geringe Abriebfestigkeit ist ganz allgemein ein Nachteil der Walzen aus faserverstärktem Kunststoff. Zur Überwindung dieses Nachteils wurden Verfahren zum Beschichten der Oberflächen derartiger Walzen entwickelt, mit Hilfe derer ein- oder mehrlagige metallische oder auch keramische Schichten auf der äußeren Mantelfläche der Walzen erzeugt werden konnten, die den Anforderungen der konkurrierenden Metallwalzen bezüglich Abrasionsbeständigkeit in Verbindung mit anderen Oberflächeneigenschaften wie z.B. Rauhigkeit, Struktur oder elektrischer Leitfähigkeit entsprachen. Zur Aufbringung derartiger verwendbarer Beschichtungen bediente man sich neben galvanischer Verfahren (DE-U-84 06 019.0) fast ausschließlich thermischer Spritzverfahren, wie z.B. dem Plasma- oder Flammspritzen. Verfahren dieser Art sind den Patentschriften GB-A-887,366, CH-A-538 549, DE-A-35 27 912 oder DE-C-38 44 290 zu entnehmen. Alle Beschichtungen nach diesen Verfahren erfordern hohen Aufwand und dennoch sind Haft- und Schlagfestigkeit der aufgetragenen Schichten häufig nicht voll befriedigend. Diese Umstände haben dazu geführt, daß die an sich wünschenswerte Verwendung faserverstärkter Walzen bis jetzt nicht in dem Umfang Eingang in die industrielle Technik gefunden hat, wie es aufgrund der hervorragenden gewichtsbezogenen Festigkeitswerte dieses fortschrittlichen Walzenwerkstoffs zu erwarten gewesen wäre.

Der Erfindung lag deshalb die Aufgabe zugrunde, eine Walze oder Rolle aus mit Fasern, insbesondere aus mit Glas- oder Kohlenstoffasern verstärktem Kunststoff zu schaffen, die unter voller Beibehaltung der guten materialspezifischen Eigenschaften von Walzen oder Rollen aus faserverstärktem Kunststoff eine abrasionsfeste, rißfreie, gegenüber Abplatzungen nicht anfällige, hinreichend korrosionsbeständige und im Vergleich zu den bisher gebräuchlichen Oberflächenbeschichtungen mit nur geringem Aufwand erzeugbare Oberflächenbeschichtung hat. Eine weitere Aufgabe bestand darin, ein rationelles, preiswertes Verfahren zur Herstellung einer derartigen Walze oder Rolle anzugeben.

Die Aufgabe wird mit den kennzeichnenden Merkmalen der Ansprüche 1 und 13 gelöst. Die Ansprüche 2 bis 12 enthalten Ausgestaltungen der Erfindung.

Ein erosionsbeständiger, lackförmiger Überzug auf Kunststoffsubstanzen ist aus der europäischen Patentanmeldung Nr. 0 273 298 A2 bekannt. Er wird dort auf Basis eines aus CrO₃, H₃PO₄, H₃PO₃ und AlPO₄ bestehenden Bindemittels, dem Aluminium- oder Titanpulver beigemischt ist, durch Auftragen auf die Kunststoffoberflächen und Einbrennen bei einer Temperatur, die der Härtungstemperatur von heißhärtenden Epoxidharzen entspricht, erzeugt. Nachteilig an diesem Verfahren ist die Notwendigkeit zum Arbeiten mit Säuren und dem stark giftigen CrO₃. Eine Anpassung der Oberflächenbeschaffenheit an unterschiedliche betriebliche Anforderungen ist nur in sehr engen Grenzen möglich und die Haftfestigkeit der Schicht ist für die Verwendung auf schnell rotierenden Walzen unter ständiger Produktberührung nicht ausreichend. Nach der Offenlegungsschrift DE 36 13 060 A1 wird eine Mischung aus einem Kunstharzbindemittel und einem Füller aus versilbertem Kupferpulver in Verbindung mit Graphitpulver zur Herstellung eines elektrisch leitfähigen Kunstharzüberzugs verwendet. Zum Auftragen der Schicht bedient man sich der üblichen Lackauftragverfahren. Der Ersatz von mit aufwendigen thermischen Spritzverfahren hergestellten, gegen Rißbildungen und Abplatzungen empfindlichen, abrasionsfesten, durch dynamische Kräfte belasteten Schichten durch eine erfindungsgemäße Schicht wird dadurch nicht nahegelegt.

Auf dem Gebiet der mit abrasionsfesten Oberflächenschichten ausgestatteten Walzen aus mit Fasern verstärkten Kunststoffen für die Druck-, die papierverarbeitende oder die folienherstellende sowie -verarbeitende Industrie ist immer wieder versucht worden, die auf galvanischem Wege oder die durch thermische Spritzverfahren aufgebrachten Schichten bezüglich ihrer Haftung auf dem Substrat und bezüglich des Zusammenhalts mehrerer zum Zwecke der Erreichung bestimmter Oberflächeneigenschaften der Walze übereinander aufgetragener Schichten zu verbessern. Man sah offensichtlich andere Möglichkeiten, diesen Walzentyp zu verbessern, als nicht erfolgversprechend an. Es war deshalb höchst überraschend, als festgestellt wurde, daß zu einem hohen Anteil mit abrasionsfesten Pulvern gefüllte Kunstharze oder Kunstharzlösungen nach deren Auftrag auf die Oberfläche der Walzen oder Rollen zu einem festhaftenden, abrasionsfesten Überzug verarbeitet werden konnten.

Die auf dem Basiskörper aus einem faserverstärkten Kunstharz unlösbar haftendende, verschleißfeste Schicht besteht aus einem als Matrix für den Füller dienenden verfestigten Kunstharz, das gleichzeitig die Haftung auf dem Basiskörper vermittelt und aus einem in die Matrix gleichmäßig verteilt eingebetteten, pulverförmigen Füller aus abrasionsfesten Material.

Die Matrix kann aus jedem thermoplastischen oder duroplatischen Kunstharz bestehen, das sich, gegebenenfalls nach Zusatz eines geeigneten Lösungsmittels, einem Lack ähnlich verarbeiten läßt und nach dem Auftragen und Verfestigen einen, auch unter dynamischen Betriebsbedingungen, d.h. unter Dauerbelastung durch Fliehkräfte in Verbindung mit zonenweiser Druckbelastung formstabilen, maßhaltigen Überzug ergibt. Preiswerte Thermoplasten dieser Art sind z.B. PVC-Organosole. Bevorzugt werden jedoch Duroplasten wie Epoxid-, ungesättigte Polyester-, Furan-, Phenolformaldehydharze oder duroplastisches Methylmethacrylatharz verwendet. Aus der Gruppe der Duroplasten haben sich insbesondere Epoxidharze als vorteilhaft erwiesen.

Der Füller kann aus jedem in Pulverform verfügbaren abrasionsfesten Stoff bestehen. Aus der Vielzahl der Stoffe, die der Fachmann hier kennt, seien als Bespiele die Oxide Al₂O₃, SiO₂, TiO₂, Cr₂O₃, Zr₂O₃, Y₂O₃, Mischoxide, insbesondere solche vom Spinelltyp, Silicate, Titanate, Carbide, Nitride, Boride oder Silicide der Übergangsmetalle von Titan, Zirkon, Vanadin, Chrom, Molybdän, Wolfram, insbesondere Siliciumcarbid, Titancarbid, Wolframcarbid, Chromcarbid, außerdem Borcarbid, kubisches Bornitrid, Aluminiumnitrid, Carbobornitrid, Siliciumnitrid, Aluminiumborid, Siliciumborid, Bor oder Silicium und desweiteren Hartlegierungen aus den Elementen Nickel, Cobalt, Eisen, Molybdän, Silicium, Aluminium, Bor aufgeführt. Die Hartstoffe können für sich allein oder in Mischungen untereinander den Füller bilden. Um eine preiswerte Walze oder Rolle herzustellen, werden bevorzugt die weniger teuren abrasiven Pulver, z.B. Al₂O₃, SiO₂, TiO₂, Cr₂O₃ oder daraus hergestellte Produkte sowie SiC, Borcarbid, Spinelle, Silikate oder Hartlegierungen von Übergangsmetallen, gegebenenfalls mit Aluminium oder Bor als zusätzlichen Legierungsbestandteilen verwendet. Durch Wahl des geeigneten Hartstoffpulvers oder einer entsprechenden Pulvermischung in Verbindung mit der Wahl eines passenden Matrixharzes und Füllgrades mit Füller, sowie gegebenenfalls einer geeigneten Oberflächennachbehandlung können die Eigenschaften der verschleißfesten Schicht dem jeweiligen Anwendungsfall angepaßt werden. Um der verschleißfesten Schicht die gewünschten Eigenschaften zu verleihen und die Verarbeitbarkeit des Kunstharz/Füller-Lacks sicherzustellen, liegt die Korngröße des jeweils eingesetzten Füllstoffs zwischen 1 und 100 µm, vorzugsweise zwischen 5 und 70 µm. Der Füller wird in einer Menge von 20 bis 70, vorzugsweise von 30 bis 50 Vol.-%, bezogen auf die aus Füller und ausgehärtetem Kunstharz bestehende Masse verwendet. Mengen von weniger als 20 Vol.-% sind möglich, doch treten dann die Oberflächeneigenschaften des Matrixharzes zu stark hervor und der beabsichtigte Effekt tritt nicht ein. Bei Verwendung von mehr als 70 Vol.-% Füller ist die Masse nur noch schwer oder gar nicht verarbeitbar und die ausgehärtete Schicht hat nicht mehr die erforderliche Festigkeit. Die Stärke der auf dem Basiskörper haftenden verschleißfesten Schicht beträgt mindestens 10 und höchstens 2000 µm. Vorzugsweise werden Schichtdicken von 50 bis 200 µm angewendet, da diese in einem aus Auftragen und Härten bestehenden Arbeitsgang erzeugt werden können. Die Herstellung stärkerer Schichten bedarf mindestens mehrerer Zwischenschritte zum Auftragen und Verfestigen.

Der Basiskörper hat die Form eines Hohlzylinders, dessen Mantel aus verstärkenden Endlosfasern, oder aus auf textile Weise miteinander verknüpften, flächigen Gebilden wie z.B. Geweben und einem Matrixharz besteht. Die Basiskörper werden nach bekannten Verfahren des Standes der Technik (s. DE-PS 35 27 912 oder DE-OS 37 15 894), z.B. durch Umwickeln oder Belegen eines Dornes mit mit Matrixharz getränkten Fäden oder Geweben unter Beachtung bestimmter Faserorientierungen bis zu einer gewünschten Schichtdicke, Aushärten des Wickelkörpers und Abziehen von dem Dorn hergestellt. Die für Verstärkungszwecke für diesen Zweck bevorzugt verwendete Faserart ist wegen ihres geringen Gewichts in Verbindung mit hoher Festigkeit und Steifigkeit die Kohlenstoffaser. Der Begriff Kohlenstoffaser umfaßt hier gleichermaßen Graphitfasern. Für die Verstärkung können auch andere bekannte Fasern herangezogen werden, insbesondere Glasfasern oder Fasern aus Polyarylamiden. Die Matrix des Basiskörpers kann aus jedem geeigneten Kunstharz bestehen, wobei die duroplastischen Kunstharze bevorzugt werden. Eine besonders gut auf dem Basiskörper haftende und außerdem dichte, porenfreie Schicht, in der die Füllerbestandteile fest eingebunden sind, wird bei Verwendung von Epoxidharzen für die Matrix des Basiskörpers und für die Matrix der auf diesem befindlichen Beschichtung erhalten. Natürlich können erfindungsgemäße abrasionsfeste Schichten auch auf nicht mit Fasern verstärkten Kunststoffwalzen oder auf Metallwalzen aufgebracht werden. Derartigen Walzen fehlen jedoch mehrere wesentliche Vorteile der erfindungsgemäßen Walzen.

Das Herstellen der Ausgangsmasse für das Aufbringen der verschleißfesten Schicht geschieht auf allgemein üblichem Wege durch intensives Vermischen der nach Rezeptur vorgegebenen Komponenten. Die erhaltene Mischung wird dann durch Tauchen, Aufstreichen, Aufbürsten oder Aufspritzen oder durch ein anderes Verfahren zum Aufbringen eines Anstrichs auf die äußere Oberfläche des Mantels des Basiskörpers aufgetragen. Als besonders rationell hat sich das Aufspritzen auf einem über eine Automatik gesteuerten aus im wesentlichen einer Drehvorrichtung und einem traversierenden, die Spritzeinrichtung z.B. eine Airless-Spritzpistole haltenden Support bestehenden Automaten erwiesen. Die für das jeweils gewählte Auftragsverfahren günstigste Konsistenz der Ausgangsmasse wird durch Zugabe eines geeigneten Lösungsmittels eingestellt. Nach erfolgtem Auftrag, der auch durch Aufbringen mehrerer übereinanderliegender Schichten vorgenommen werden kann, wird der Basiskörper so lange weiter gedreht, bis gegebenenfalls in der Schicht befindliches Lösungsmittel weitgehend verdampft und die Schicht soweit verfestigt ist, daß sie ihre Form behält. Der beschichtete Körper wird dann einer Behandlung unterzogen, die zum vollständigen Aushärten der aufgebrachten Schicht und einer festen Verankerung der Schicht auf dem Basiskörper führt. Die Art der Behandlung richtet sich nach den Erfordernissen des verwendeten Kunstharzes. Bei duroplastischen Harzen ist dies häufig eine thermische Behandlung, die nach einem bestimmten Programm abläuft. Nach dem Aushärten, bzw. endgültigen Verfestigen wird die Oberfläche der aufgebrachten Schicht in an sich bekannter Weise durch Glätten, Polieren oder Aufrauhen dem vorgegebenen Verwendungszweck angepaßt. Beispielsweise werden die Oberflächen von Bahnführungswalzen aufgerauht, um ein Entweichen der mit der Materialbahn zwischen die Walze und die Materialbahn eingezogenen Luft zu ermöglichen.

Neben den bereits beschriebenen Vorteilen kann eine erfindungsgemäße Walze, wenn ihre Oberfläche nach entsprechendem Gebrauch den an sie gestellten Anforderungen nicht mehr genügt, dadurch wiederverwendet werden, daß die alte Oberflächenschicht entfernt, z.B. abgedreht wird und auf die neu vorbereitete, alte Basiswalze eine neue Oberflächenbeschichtung aufgetragen wird. Dies führt zu einer weitern Senkung der Betriebskosten für erfindungsgemäße Walzen und hat einen die Umwelt entlastenden Effekt.

### Zusammengefaßt hat die Erfindung folgende Vorteile:

Unter Beibehaltung der guten massespezifischen mechanischen, insbesondere dynamischen Eigenschaften einer Walze aus faserverstärktem Kunststoff mit einer galvanisch oder durch ein thermisches Spritzverfahren aufgebrachten abriebfesten Schicht ist die Herstellung der erfindungsgemäßen Walze wesentlich preiswerter, die abrasionsfeste Schicht haftet unlösbar auf dem Basiskörper, neigt nicht zu Abplatzungen oder Rißbildung, kann an unterschiedliche betriebliche Anforderungen leicht angepaßt und sie kann nach Abtragen einer ersten, verbrauchten Schicht unter Verwendung der gleichen Basiswalze wieder erneuert werden.

Die Erfindung wird im folgenden anhand zweier Ausführungsbeispiele erläutert. Sie ist jedoch nicht auf die Ausführungsformen dieser Beispiele beschränkt.

### Beispiel 1

### Vorbereitung der Basiswalze:

Eine Basiswalze aus mit Kohlenstoffasern verstärktem Epoxidharz, Innendurchmesser 90 mm, Außendurchmesser 100 mm, Länge 2000 mm, die aus im Wechsel mit 12° Neigung gegen die Senkrechte positionierten C-Faser-Wickellagen aufgebaut worden war, wurde in eine Drehbank eingespannt und an ihrem Umfang auf 0,15 mm unter das vorgegebene Durchmesserendmaß abgeschliffen. Nach dem sorgfältigen Abblasen mit ölnebelfreier Preßluft war der Basiskörper für den Beschichtungsvorgang vorbereitet.

### Herstellung der Spritzlösung:

### Rezeptur:

| | Gew.-Teile; | Vol.-% |
|---|---|---|
| Epoxidharz L 20 (Fa. Bakelite) | 21,1 | 37,7 |
| Epoxidharzhärter SL (Fa. Bakelite) | 7,2 | 12,9 |
| Legierung aus 97 Gew.-% Al₂O₃ und 3 Gew.-% TiO₂ (GTV Nr. 40.01), Körnung 5 bis 25 µm | 63,3 *) | 35,2 |
| Ethanol | 8,4 | 24,2 |

| | | |
|---|---|---|
| *) diese Menge entspricht ca. 41 Vol.-% Füller, bezogen auf die ausgehärtete Schicht. | | |

Die Rezepturbestandteile wurden unter Rückbehalt eines geringen Anteils an Ethanol mit einem Turborührer intensiv gemischt und dann durch Zugabe weiteren Lösungsmittels auf eine Viskosität eingestellt, die einer Auslaufzeit aus einem Auslaufbecher nach DIN 53211, Volumen 100 ml, Auslaufdüse 4 mm, von 42 DIN-sec entsprach.

Zum Spritzen der so hergestellten Flüssigkeit auf den Basiskörper wurde eine automatisch steuerbare, mit einem Support versehene Wickel-, bzw. Beschichtungsmaschine verwendet. Die Flüssigkeitsspritzeinrichtung (Spritzpistole vom Typ Sata Jet, Hersteller Fa. Sata, Ludwigsburg) war am Support befestigt. Nach Inbetriebnahme der Maschine wurde während dreier Übergänge des Spritzwerkzeugs über den Basiskörper eine 80 µm stark Schicht unter Anwendung der folgenden Spritzparameter erzeugt:

| | |
|---|---|
| Abstand Spritzdüse-Walze | 33 cm |
| Drehzahl des Basiskörpers | 150 min⁻¹ |
| Vorschub des Supports | 10 cm · min⁻¹ |
| Durchmesser der Spritzdüse | 2,5 mm |
| Luftmenge, Einstellung | maximal |
| Druck | 4 bar |
| Materialmenge, Einstellung | 3,2 |

Nach ca.10-minütigem Ablüften unter Drehen wurde die Walze aus der Beschichtungseinrichtung genommen und die aufgebrachte Schicht in einem Umlufttrockenschrank unter folgenden Bedingungen gehärtet:
- Halten bei Raumtemperatur 24 Std.
- Aufheizen auf 80 °C während 1 Std.
- Haltezeit bei 80 °C 15 Std.
- Nach Ausschalten der Heizung, Abkühlung auf Raumtemperatur.

Nach der Entnahme aus dem Trockenschrank wurde die Walze zur Erzielung einer glatten, dichten, fehlerfreien Oberfläche unter Rotieren mit einem Schmirgelleinen (Körnung 180) leicht überschliffen und so gebrauchsfertig gemacht.

Eine andere, nach dem gleichen Verfahren hergestellte Walze wurde für die Verwendung als Bahnführungswalze zusätzlich noch durch Sandstrahlen mit Korund, Körnung 0,3 bis 0,6 mm aufgerauht.

### Beispiel 2

Eine Oberflächenschicht entsprechend Versuch 1, Nachbearbeitungsvariante 2, deren Oberfläche aufgerauht ist, wurde auf folgende Weise auf direktem Wege erzeugt:

Eine wie für Versuch 1 hergestellte Basiswalze wurde mit einem Diamantdrehstahl auf ein gegenüber dem Durchmessersollmaß der fertigen, beschichteten Walze um 0,2 mm geringeres Durchmessermaß abgedreht und danach mit ölfreier Preßluft abgeblasen. Die Spritzlösung wurde auf Basis der folgenden Rezeptur wie bei Versuch 1 beschrieben, hergestellt:

### Rezeptur:

| | Gew.-Teile; | Vol.-% |
|---|---|---|
| Epoxidharz L 20 (Fa. Bakelite) | 17,4 | 31,1 |
| Epoxidharzhärter SL (Fa. Bakelite) | 5,9 | 10,6 |
| Legierung aus 97 Gew.-% Al₂O₃ und 3 Gew.-% TiO₂ (GTV Nr. 40.01), Körnung 5 bis 25 µm | 70,0 *) | 39,0 |
| Ethanol | 6,7 | 19,3 |

| | | |
|---|---|---|
| *) diese Menge entspricht ca. 48 Vol.-% Füller, bezogen auf die ausgehärtete Schicht. | | |

Nach dem Mischen der Rezepturbestandteile entsprach die Viskosität 100 DIN-sec (DIN 53211).

Das Aufspritzen der hergestellten Spritzflüssigkeit geschah auf der gleichen Wickel-, bzw. Beschichtungsmaschine wie bei Versuch 1, jedoch unter folgenden Bedingungen:

| | |
|---|---|
| Abstand Spritzdüse-Walze | 47 cm |
| Drehzahl des Basiskörpers | 150 min⁻¹ |
| Vorschub des Supports | 15 cm · min⁻¹ |
| Durchmesser der Spritzdüse | 2,5 mm |
| Luftmenge, Einstellung | maximal |
| Druck | 4 bar |
| Materialmenge, Einstellung | 3,6 |

Es wurde in fünf Spritzübergängen über den Basiskörper eine insgesamt 100 µm starke Schicht aufgebracht, die visuell einen rauhen Eindruck machte. Nach dem Ablüften und Aushärten der aufgetragenen Schicht, das beides wie unter Versuch 1 vorgenommen wurde, wurde die Walzenoberfläche noch durch Aufsprühen von Siliconharz hydrophobiert. Die so hergestellte Walze war ohne weitere Bearbeitungsschritte als Bahnführungswalze für den ölfarbenbetrieb einer Rollendruckmaschine geeignet.

Die Haftfestigkeit erfindungsgemaßer Schichten wurde mit einem Abreißtest geprüft. In keinem der Tests wurde die abrasionsfeste Schicht in der Verbindungszone zur Basiswalze getrennt. Delaminierungen innerhalb der Schicht traten ebenfalls nicht auf.

## Patentansprüche

1. Walze oder Rolle aus einem Basiskörper aus faserverstärktem Kunststoff und einer den äußeren Rollenmantel mindestens zum Teil bedeckenden verschleißfesten Schicht,
dadurch gekennzeichnet, daß
die verschleißfeste Schicht aus einer Mischung aus einem Kunstharz und einem pulverförmigen, verschleißfesten Füller besteht, wobei die Korngröße des Füllers zwischen 1 und 100 µm liegt und der Gehalt des Füllers in der Mischung 20 bis 70 Volumenprozent, bezogen auf die Gesamtmischung im ausgehärteten Zustand beträgt und die verschleißfeste Schicht unlösbar auf der Oberfläche des Basiskörpers haftet.

2. Walze oder Rolle nach Patentanspruch 1,
dadurch gekennzeichnet, daß
die Matrix der verschleißfesten Schicht aus einem härtbaren Kunstharz aus der Gruppe Epoxid-, ungesättigtes Polyester-, Furan-, Phenolformaldehyd- oder duroplastisch härtendes Methylmethacrylatharz besteht.

3. Walze oder Rolle nach den Patentansprüchen 1 und 2,
dadurch gekennzeichnet, daß
der Füller aus einem gegen Abrieb beständigen keramischen oder metallischen Material oder aus einer Kombination aus mehreren dieser Materialien besteht.

4. Walze oder Rolle nach den Patentansprüchen 1, 2 oder 3,
dadurch gekennzeichnet, daß
der Füller aus mindstens einem keramischen Material aus der Gruppe Al₂O₃, SiO₂, TiO₂, Cr₂O₃, Zr₂O₃, Siliciumcarbid, Titancarbid, Wolframcarbid, Chromcarbid, Borcarbid, Aluminiumnitrid, Carbobornitrid, Siliciumnitrid, Aluminiumborid, Siliciumborid, Bor, Silicium oder kubischem Bornitrid besteht.

5. Walze oder Rolle nach den Patentansprüchen 1 bis 3,
dadurch gekennzeichnet, daß
der Füller aus mindestens einem Reaktionsprodukt von MgO oder von CaO mit Al₂O₃, SiO₂, TiO₂, Cr₂O₃, Zr₂O₃ in Pulverform besteht oder zusätzlich mindestens ein pulverisiertes Material aus der in Anspruch 4 angegebenen Gruppe von Stoffen enthält.

6. Walze oder Rolle nach den Patentansprüchen 1 bis 3,
dadurch gekennzeichnet, daß
der Füller zusätzlich zu den in den Ansprüchen 4 und 5 bezeichneten Stoffen mindestens eine Hartstofflegierung aus mindestens zwei der Elemente Ni, Co, Mo, Si, Fe, Al, B, in Pulverform enthält.

7. Walze oder Rolle nach den Patentansprüchen 1, 2 und 3,
dadurch gekennzeichnet, daß
der Füller aus mindestens einer Hartstofflegierung aus mindestens zwei der Elemente Ni, Co, Mo, Si, Fe, Al, B in Pulverform besteht.

8. Walze oder Rolle nach den Patentansprüchen 1 bis 7,
dadurch gekennzeichnet, daß
die Dicke der verschleißfesten Schicht zwischen 10 und 2000 µm beträgt.

9. Walze oder Rolle nach den Patentansprüchen 1 bis 8,
dadurch gekennzeichnet, daß
der Basiskörper aus einem mit Kohlenstoffasern verstärkten Kunststoff besteht.

10. Walze oder Rolle nach den Patentansprüchen 1 bis 8,
dadurch gekennzeichnet, daß
der Basiskörper aus einem mit Glasfasern verstärkten Kunststoff besteht.

11. Walze oder Rolle nach den Patentansprüchen 1 bis 10,
dadurch gekennzeichnet, daß
die Matrix des Basiskörpers und die Matrix der verschleißfesten Schicht aus einem Epoxidharz besteht.

12. Walze oder Rolle nach den Patentansprüchen 1 bis 11,
dadurch gekennzeichnet, daß
die verschleißfeste Schicht auflackiert ist.

13. Verfahren zur Herstellung einer Walze oder Rolle aus einem Basiskörper aus faserverstärktem Kunststoff und einer verschleißfesten Schicht gemäß einem der Ansprüche 1 bis 7 und 9 bis 11, bei dem ein füllstoffhaltiger Kunstharzlack auf die Oberfläche des Basiskörpers aufgespritzt wird,
dadurch gekennzeichnet, daß
eine speziell bezüglich ihres Außendurchmessers auf ein bestimmtes Ausgangsmaß bearbeitete Walze oder Rolle aus mit Fasern verstärktem Kunststoff längsachsenzentriert in eine mit einem Support ausgerüstete Drehvorrichtung eingespannt und danach in Drehung versetzt wird, sodann auf die zylindrische Oberfläche der Rolle oder Walze mittels einer an dem Support befestigten Flüssigkeitsspritzvorrichtung bei vorgegebenem Vorschub des Supports und vorgegebener Drehzahl der Walze oder Rolle eine 20 bis 200 µm dicke Schicht eines Kunstharzlacks, der in dispergierter Form ein verschleißfestes Pulver mit einer Korngröße zwischen 1 und 100 µm in einer Menge von 30 bis 55 Vol.-%, bezogen auf die gesamte aufzuspritzende Masse enthält, aufgespritzt wird,
unter weiterem Rotieren der Walze,
gegebenenfalls unter Verdampfen von in der aufgebrachten Schicht enthaltenem Lösungsmittel die Lackschicht wenigstens zum Teil, jedoch bis zur Formstabilität verfestigt wird,
sodann die Walze in eine Härtungsvorrichtung, die gegebenenfalls beheizt werden kann, überführt und die verschleißfeste Schicht ausgehärtet wird.

## Claims

1. A cylinder or roller formed of a basic body of fibre-reinforced plastics material and a wear-resistant layer covering the outer roller surface at least in part, characterised in that the wear-resistant layer consists of a mixture of a synthetic resin and a pulverous wear-resistant filler, with the grain size of the filler lying between 1 and 100 µm and the proportion of the filler in the mixture amounting to 20 to 70% by volume, relative to the total mixture in the hardened state, and the wear-resistant layer adhering to the surface of the basic body in an undetachable manner.

2. A cylinder or roller according to claim 1, characterised in that the matrix of the wear-resistant layer consists of a hardenable synthetic resin from the group epoxide resin, unsaturated polyester resin, furan resin, phenol formaldehyde resin or methyl methacrylate resin which hardens as a thermosetting resin.

3. A cylinder or roller according to claims 1 and 2, characterised in that the filler consists of a ceramic or metallic material, which is resistant to abrasion, or of a combination of a plurality of these materials.

4. A cylinder or roller according to claims 1, 2 or 3, characterised in that the filler consists of at least one ceramic material of the group Al₂O₃, SiO₂, TiO₂, Cr₂O₃, Zr₂O₃, silicon carbide, titanium carbide, tungsten carbide, chromium carbide, boron carbide, aluminium nitride, carboboron nitride, silicon nitride, aluminium boride, silicon boride, boron, silicon or cubic boron nitride.

5. A cylinder or roller according to claims 1 to 3, characterised in that the filler consists of at least one reaction product of MgO or of CaO with Al₂O₃, SiO₂, TiO₂, Cr₂O₃, Zr₂O₃ in powder form or contains in addition at least one pulverized material of the group of substances indicated in claim 4.

6. A cylinder or roller according to claims 1 to 3, characterised in that the filler contains, in addition to the substances specified in claims 4 and 5, at least one mechanically resistant alloy of at least two of the elements Ni, Co, Mo, Si, Fe, Al, B in powder form.

7. A cylinder or roller according to claims 1, 2 and 3, characterised in that the filler consists of at least one mechanically resistant alloy of at least two of the elements Ni, Co, Mo, Si, Fe, Al, B in powder form.

8. A cylinder or roller according to claims 1 to 7, characterised in that the thickness of the wear-resistant layer amounts to between 10 and 2000 µm.

9. A cylinder or roller according to claims 1 to 8, characterised in that the basic body consists of a plastics material which is reinforced by carbon fibres.

10. A cylinder or roller according to claims 1 to 8, characterised in that the basic body consists of a plastics material which is reinforced by glass fibres.

11. A cylinder or roller according to claims 1 to 10, characterised in that the matrix of the basic body and the matrix of the wear-resistant layer consist of an epoxide resin.

12. A cylinder or roller according to claims 1 to 11, characterised in that the wear-resistant layer is applied as a lacquer.

13. A method for producing a cylinder or roller formed of a basic body of fibre-reinforced plastics material and a wear-resistant layer according to one of claims 1 to 7 and 9 to 11, wherein a filler-containing synthetic resin lacquer is sprayed onto the surface of the basic body, characterised in that a cylinder or roller of fibre-reinforced plastics material that is processed especially with regard to its outside diameter to a specified starting dimension is clamped, so as to be centred along the longitudinal axis, in a turning device equipped with a support and thereupon is set rotating, then a layer of synthetic resin lacquer is sprayed onto the cylindrical surface of the cylinder or roller by means of a liquid-spraying device secured to the support, with given advance of the support and given speed of the cylinder or roller, which layer is 20 to 200 µm thick and contains in a dispersed form a wear-resistant powder with a grain size of between 1 and 100 µm, in a quantity of 30 to 55% by volume, relative to the total material to be sprayed thereon, with, whilst there is further rotation of the cylinder, the lacquer layer solidifying at least in part, yet to the extent to give dimensional stability, if applicable with evaporation of any solvent contained in the layer applied, and then the cylinder being transferred to a hardening device, which, if applicable, can be heated, and the wear-resistant layer being hardened.

## Revendications

1. Cylindre ou rouleau formé d'un corps de base en matière plastique renforcée par des fibres, et d'une enveloppe extérieure avec, au moins en partie, une couche de recouvrement résistant à l'usure,
caractérisé en ce que
la couche résistant à l'usure est formée d'un mélange de résine synthétique et d'une charge pulvérulente, résistant à l'usure, la granulométrie de la charge étant comprise entre 1 et 100 µm et la teneur en charge du mélange étant comprise entre 20 et 70 % en volume rapportés au total du mélange à l'état durci, et la couche résistant à l'usure est accrochée de manière solidaire à la surface du corps de base.

2. Cylindre ou rouleau selon la revendication 1,
caractérisé en ce que
la matrice de la couche résistant à l'usure est formée d'une résine synthétique durcissable choisie dans le groupe formé par les résines époxydes, des polyesters insaturés, furane, phénolformaldéhyde et résines méthylméthacrylates thermodurcissables.

3. Cylindre ou rouleau selon les revendications 1 et 2,
caractérisé en ce que
la charge est en une matière céramique ou métallique résistant à l'abrasion, ou en une combinaison de plusieurs de ces matériaux.

4. Cylindre ou rouleau selon les revendications 1, 2, 3,
caractérisé en ce que
la charge est composée d'au moins une matière céramique du groupe Al₂O₃, SiO₂, TiO₂, Cr₂0₃, Zr₂0₃, carbure de silicium, carbure de titane, carbure de tungstène, carbure de chrome, carbure de bore, nitrure d'aluminium, carbonitrure de bore, nitrure de silicium, borure d'aluminium, borure de silicium, bore, silicium ou nitrure de bore cubique.

5. Cylindre ou rouleau selon les revendications 1 à 3,
caractérisé en ce que
la charge se compose d'au moins un produit de réaction de MgO ou CaO avec Al₂O₃, SiO₂, TiO₂, Cr₂0₃, Zr₂O₃ à l'état de poudre ou, en plus, d'au moins une matière pulvérisée selon le groupe de matières de la revendication 4.

6. Cylindre ou rouleau selon les revendications 1 à 3,
caractérisé en ce que
la charge contient, en plus des matières selon les revendications 4 et 5, au moins un alliage d'une matière dure d'au moins deux des éléments Ni, Co, Mo, Si, Fe, Al, B à l'état de poudre.

7. Cylindre ou rouleau selon les revendications 1 à 3,
caractérisé en ce que
la charge se compose d'au moins un alliage de matière dure d'au moins deux des éléments Ni, Co, Mo, Si, Fe, Al, B à l'état de poudre.

8. Cylindre ou rouleau selon l'une des revendications 1 à 7,
caractérisé en ce que
l'épaisseur de la couche résistant à l'usure est comprise entre 10 et 2000 µm.

9. Cylindre ou rouleau selon l'une des revendications 1 à 8,
caractérisé en ce que
le corps de base se compose d'une matière plastique renforcée par des fibres de carbone.

10. Cylindre ou rouleau selon les revendications 1 à 8,
caractérisé en ce que
le corps de base est en matière plastique renforcée par des fibres de verre.

11. Cylindre ou rouleau selon les revendications 1 à 10,
caractérisé en ce que
la matrice du corps de base et la matrice de la couche résistant à l'usure sont en une résine époxyde.

12. Cylindre ou rouleau selon les revendications 1 à 11,
caractérisé en ce que
la couche résistant à l'usure est appliquée comme vernis.

13. Procédé de fabrication d'un cylindre ou d'un rouleau composé d'un corps de base en matière plastique renforcée par des fibres, et d'une couche résistant à l'usure, selon l'une des revendications 1 à 7 et 9 à 11, selon lequel on pulvérise un vernis de résine synthétique contenant une charge, à la surface du corps de base,
caractérisé en ce que
on fixe un cylindre ou rouleau de matière plastique renforcée par des fibres et dont le diamètre extérieur a été usiné à une certaine dimension de départ, avec centrage suivant l'axe longitudinal pour être fixé dans un dispositif d'entraînement en rotation équipé d'un support, puis on met en rotation et on pulvérise sur la surface cylindrique du rouleau ou du cylindre à l'aide d'un dispositif de pulvérisation de liquide fixé sur le support et en déplaçant de manière prédéterminée le support et pour une vitesse de rotation prédéterminée du cylindre ou du rouleau, on applique une couche de vernis de résine synthétique d'une épaisseur de 20 à 200 µm contenant, sous une forme dispersée, une poudre résistant à l'usure ayant une granulométrie comprise entre 1 et 100 µm suivant une quantité représentant entre 30 et 55 % en volume de toute la masse à pulvériser, et en continuant à faire tourner le cylindre le cas échéant en évaporant le solvant contenu dans la couche ainsi appliquée, on laisse la couche de vernis au moins partiellement se solidifier jusqu'à ce que sa forme soit stable,
puis on place le cylindre dans un dispositif de durcissement qui est le cas échéant chauffé, et on laisse prendre la couche résistant à l'usure.
